# EUROPEAN PATENT SPECIFICATION

(11) **EP 1 199 867 B1**
(45) Date of publication and mention of the grant of the patent: **19.09.2012**
(21) Application number: 00122917.8
(22) Date of filing: 20.10.2000
(51) Int. Cl.: H04M 1/60, H04M 1/05

(54) **Mobile terminal**
Mobiles Endgerät
Terminal mobile

(43) Date of publication of application: 24.04.2002
(73) Proprietor: Sony Deutschland GmbH, 10785 Berlin (DE)
(72) Inventor: Lechner, Thomas, c/o Sony Intern. (Europe) GmbH, 85609 Aschheim (DE); Doms, Marc, c/o Sony Intern. (Europe) GmbH, 85609 Aschheim (DE)
(74) Representative: Körber, Martin Hans

(56) References cited:
- EP-A- 0 606 996
- WO-A-99/03294
- US-A- 5 596 638
- US-A- 5 715 321
- US-A- 5 783 926
- US-A- 5 859 522
- US-A- 6 122 369

## Description

The present invention relates to a mobile terminal for a wireless communication system.

The use of a headset with a headset microphone and with a headset loudspeaker with mobile terminals for wireless communication systems, such as the GSM and UMTS system, is known and is becoming more and more popular since it allows to use mobile terminals without the necessity to hold the mobile terminal to the head while being in a conversation. Known headsets are connectable to an input/output connector of the mobile terminal and consist basically of a wire with a loudspeaker comprised in an ear plug to be plugged into a user's ear and a microphone on the wire. Thus, while the headset being connected to the mobile terminal, the user can carry the mobile terminal in the pocket of his jacket while having the ear plug in his ear thus being able to communicate without holding the mobile terminal to his head. Recently, mobile terminals have been proposed which comprise a separate jack for the connection of a headset. These jacks are constructed to transmit audio signals from the mobile terminal to the loudspeaker of the headset and audio signal received from the microphone of the headset to the mobile terminal.

US 5504812 proposes such a headset. The mobile terminal comprises a headset detect circuit which detects if a headset connector has been plugged into the corresponding jack of the mobile terminal. The headset detect circuit then signals the microprocessor of the mobile terminal which controls the operation of the mobile terminal correspondingly by switching the loudspeaker and the microphone of the mobile terminal off and connecting the transmitter and the receiver of the mobile terminal to the headset. The headset is constructed in a way that the microphone is contained at the end of a boom which is pivotably connected to a housing with the loudspeaker. By pivoting the boom, a user can pick up or terminate calls. An off-hook circuit detects the position of the boom and signals to the processor of the mobile terminal so that the operation of the whole terminal can be controlled correspondingly.

Us 5832075 proposes an event detector for a headset connected to a telephone, comprising a headset present detector for detecting if a headset is present. The headset present detector is hereby not described in detail.

US 6,122,369 discloses a mobile terminal for a wireless communication system with an internal microphone MIC1 and an internal loudspeaker SPK1. It features two distinct sensing circuits 20 and 30 to detect if an earphone-microphone is connected or if an earphone-microphone key SW1 has been pressed. Further, a connection jack 80 is provided for connecting an external head set 90 comprising a head set loudspeaker SPK2 and a head set microphone MIC2. Further, the mobile terminal comprises a microcontroller 12 and an audio processor 14 for operating the mobile terminal and/or a connected external head set. Upon insertion of the plug 92 of the external head set 90 in the jack connector 80 of the mobile terminal, an earphone-microphone detector 20 connected to a microphone line generates a signal A2. The microcontroller 12, upon receipt of the signal A2 from the earphone-microphone detector 20, outputs an external speaker driving signal A4 which drives the external speaker amplifier 50 and enables the output of audio signals .from the external speaker SPK2 of the connected head set 90. In relation to the signal A5 which is called an external microphone selection signal, it is stated that the microcontroller 12 generates the signal A5 in response to the received earphone-microphone signal A2. Also it is stated that the earphone-microphone selector 70 selects a microphone MIC2 of the external headset by the signal A5. The earphone-microphone selector 70 is a switch which is operated by a signal A5. If the switch 70 is closed (A5 having a logic low level), then the microphone amplifier 60 is connected directly to an external microphone MIC2 if an external head set 90 is connected to the jack connector. If the switch 70 is opened in response to a logic low signal A5, no microphone signal reaches the audio processor. However, during a conversation, if a user who is using a connected external head set 90 wants to complete the communication, presses the switch SW1. The pressing of the switch SW1 is detected by a different sensing circuit, the earphone key sensing circuit 30, which generates the signal A1. In response to the receipt of the signal A1, the microcontroller 12 proceeds to terminate the conversation.

WO 99/03294 discloses a portable communication and audio system and a corresponding head set. Hereby, the functionalities of a mobile terminal for a wireless telecommunication system and an audio device, e.g. a CD player, are combined into a single device. The head set has two speakers enabling the output of stereophonic signals, whereby the head set comprises a switch enabling a telephone head set function whereby a head set microphone and one head set speaker is used or an audio function in which two speakers are used. The portable communication and audio system comprises an off-hook detection circuit for detecting if a head set is connected and for controlling the operation of a portable communication and audio system as well as the operation of the head set depending on the detection result. Due to the telephone as well as the audio functionality, the circuitry of the communication and audio device as well as the head set is quite complex. Upon the connection of a head set to the communication and audio device, the presence of the connected head set is detected by the off-hook detection circuit 42 and a corresponding signal is supplied to the microcontroller 49. The microcontroller 49 then controls various switches which are selectively connecting internal or external microphones and internal or external speakers.

US 5,596,638 discloses a wireless telephone with a microprocessor monitoring the presence or absence of an external head set and controlling the operation of the telephone depending on the detection result. The presence and the connection of an external head set is detected by the microprocessor which in turn controls several switches to turn the internal microphone and loudspeaker on and off.

EP 0 606 996 A2 discloses a portable telephone set which controls the operation of the telephone and a connected head set on the basis of a detected presence or absence of the connection of the external head set by means of a microcomputer.

US 5-859-522 discloses an accessory identification apparatus used in an electronic device including a connector to couple to an accessory and a controller in said electronic device coupled to the connector. The connector includes an information pin to receive information generated from operation of the accessory. The controller identifies the accessory from a voltage level generated by attachment of the accessory to the information pin.

US 5-783-926 discloses an apparatus for identifying the identity of an accessory device connected to an electronic device using a voltage divider circuit, an analog to digital converter and a database associating various digital values with the identity of various accessory devices. The voltage divider circuit includes a first resistor located within the electronic device and having a single resistance value. The voltage divider circuit also includes a second resistor located within the accessory device whose resistance value varies between accessories such that a distinct voltage value is applied to the analog to digital converter for each accessory. The digital output value of the analog to digital converter is compared with a list of values stored within the database to determine the identity of the accessory device.

The object of the present invention is to provide a very simple but still effective way to switch between an internal microphone and a head set microphone of an external head set of a portable terminal of a wireless communication system, whereby further the detection of a connected external head set and the detection of the operation state of a connected external headset are enabled in a very simple but still effective and reliable manner.

The above object is achieved by a mobile terminal for a wireless communication system according to claim 1.

Thus, the mobile terminal according to the present invention allows to control the operation of a connected headset on the basis of an electrical value detected at the internal microphone. This allows a simple, thus cost-effective and still reliable detection of an external headset, since the internal microphone operation state is changed when an external headset is connected to the mobile terminal. Further, since the potential, i.e. a value which varies depending on a state change in another element, is detected by the detecting means, a reliable and active control of the operation of a connected headset is enabled.

The term connection port here defines one of the two electrical connection of the internal microphone with two microphone lines. Said detecting means can comprise a resistor and a capacity for obtaining a clear direct voltage signal. Hereby a cheap and simple detection is possible. The inventive solution is easy to implement and still provides a large variety of detecting possibilities, i.e. detection of the presence of an external headset, of the operation state of a connected headset, if a headset is correctly connected and so forth.

Advantageously, the processing means controls characteristics of the headset loudspeaker and the headset microphone of a connected headset on the basis of the detection result. E. g., when the detection means detects that an external headset is connected, the processing means automatically adjusts the sensitivity of the headset loudspeaker and the headset microphone on the basis of and depending on the detection result.

According to the invention, the detecting means is not only able to detect if an external headset is connected, but is also able to detect one out of several operation states of a connected headset so that the operation of the headset can be controled and adjusted correspondingly. The processing means can advantageously control the operation of the mobile terminal on the basis of the detected operation state of a connected headset. Thus, not only the operation of a connected headset can be controlled on the basis of the detection result, but also the operation of the mobile terminal. Further, the processing means can advantageously control a call pick up function of the mobile terminal on the basis of a specific detected operation state of a connected headset. Additionally or alternatively, the processing means can advantageously control a call end function of the mobile terminal on the basis of a specific detected operation state of a connected headset. In this case, a user can actively change the operation state of the headset in order to pick up or terminate a call without touching the mobile terminal. It is noted again that a single detection means detects if a headset is connected at all and further detects the different operations states of the headset. The detecting means has a structure which allows to differentiate different states of a connected headset, e.g. on the basis of different voltage levels, each voltage level corresponding to a respective operation state of the headset. In this case, the detecting means is advantageously connected to a connection port of the internal microphone. Hereby, the detection means can e.g. measure a direct voltage level indicative of the operation state of the headset microphone of a connected headset.

Two kinds of signals are transmitted within the headset. First kind of signals are acoustic signals picked up by the microphone, converted into electric signals and forwarded to the mobile terminal. The second kind of signals are signals coming from the mobile terminal which are converted by the loudspeaker of the headset into acoustic signals output to the user. Since the detection means is connected to a connection port of the internal microphone, different operation states of the headset microphone of a connected headset can be used for controlling the operation of the headset and/or the mobile terminal. For example, the detection means can detect if the headset microphone of a connected headset is in an operating state or in an non-operating state. Further advantageously, the detecting means detects if a headset is not correctly connected and causes corresponding measures in this case. For example, when a headset is not properly connected to the mobile terminal, a warning signal could be output to a user.

Advantageously, the connections means is a headset connector comprising at least one connection for a headset microphone and at least one connection for a headset loudspeaker of an external headset. Hereby, the headset connector can be a four-pole jack comprising two connections for a headset microphone and two connections for a headset loudspeaker of an external headset.

A headset for a mobile terminal for a wireless communication system as described above, may comprise a headset loudspeaker, a headset microphone, a connection means for connection with a corresponding connection means of the mobile terminal and a microphone switch means for switching the headset microphone into a non-operating state. This is for example advantageous in case that a user using a mobile terminal with a connected headset and being in a communication wants to have an intermediate discussion with a third person standing nearby while having a communication on the mobile terminal. The microphone switch means allows the user to switch the headset microphone into a non-operating state so that the communication partner does not hear the intermediate discussion with the third person. The microphone switch means can also be used for picking up and/or terminating a call or for setting further features due to the specific structure of the detection means comprised in the mobile terminal for detecting if an external headset is connected. This detection means is also able to detect the operation state of the headset i. e. the position of the microphone switch means of the headset. The microphone switch means can form a short-circuit for the headset microphone. In this case, the detection means of the mobile terminal can easily detect the voltage variations caused by the operation of the microphone switch means. The microphone switch means can be simple press button.

The present invention is further explained in the following description relating the the enclosed drawings in which
Fig. 1 shows a schematic block diagram of a mobile terminal and a headset according to the present invention, and
Fig. 2 shows a more detailed circuit example of essential parts of the mobile terminal and the headset of the present invention.

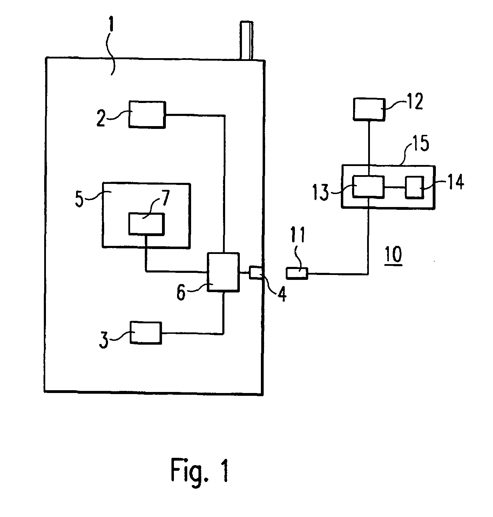

Fig 1 shows a schematic block diagram of a mobile terminal 1 for a wireless telecommunication system as e. g. the GSM or the UMTS system, according to the present invention. The mobile terminal 1 may be a single band, dual band, triple band or more band cell phone adapted to receive and transmit signals wirelessly. Although not shown in the figures, the mobile terminal 1 according to the present invention thus comprises all necessary elements for the operation in wireless telecommunication system, such as an antenna, modulators, demodulators, etc.

Further, the mobile terminal 1 according to the present invention comprises an internal loudspeaker 2 being internally arranged in an upper part of a casing of the mobile terminal 1. The mobile terminal 1 further comprises an internal microphone 3 being internally arranged in a lower part of the casing of the mobile terminal 1. The internal loudspeaker 2 converts electric signals e. g. coming from a processing means 5 into acoustic signals to be output to a user. The internal microphone 3 picks up or receives acoustic signals from a user and converts the received acoustic signals into electric signals which are supplied to the processing means 5. The received acoustic signals, are then, after further processing, transmitted to a communication partner. The acoustic signals output by the internal loudspeaker 2 are signals received via the wireless communication system.

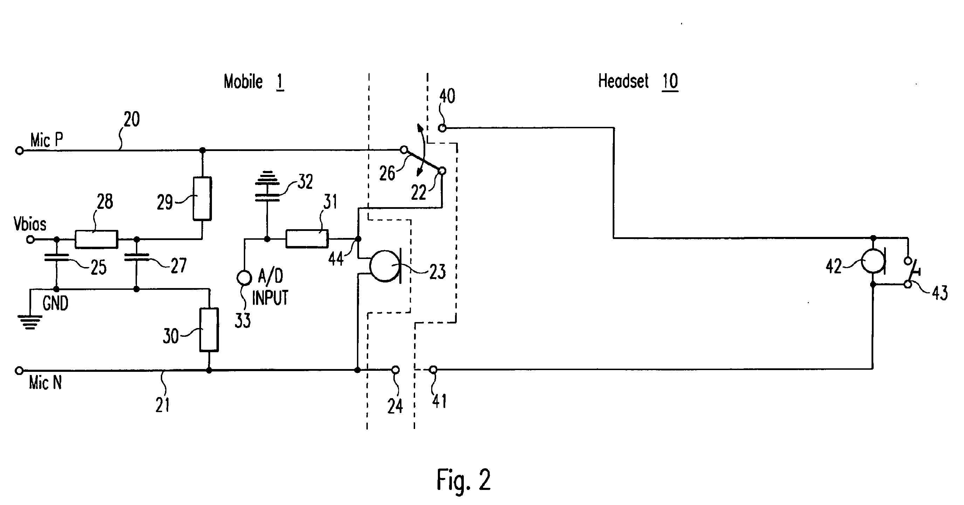

The processing means 5 is e. g. a microprocessor or a microcontroller controlling essential functions of the mobile terminal 1. E. g., the processing means 5 can be a base band chip performing all the necessary base band processing for the mobile terminal 1. The processing means 5 further operates and controls the internal loudspeaker 2 and the internal microphone 3 of the mobile terminal 1 via switch means 6 which are also connected to a connection means 4 for connecting an external headset 10 to a mobile terminal 1. In a preferred embodiment of the present invention, the connection means 4 is a four pole jack offering a four pole connection for a corresponding connection means 11, as e. g. a jack connector, of the headset 10. A four pole connection of the preferred embodiment provides two connection lines for a headset loudspeaker 12 and two connection lines for a headset microphone 13, as will be explained in more detail in relation to Fig. 2.

The switch means 6 comprises two switches, a first switch for switching between the internal loudspeaker 2 of the mobile terminal 1 and the headset loudspeaker 12 of a connected headset 10, and a second switch means for switching between the internal microphone 3 of the mobile terminal 1 and the headset microphone 13 of a connected headset 10. The first and the second switch means forming the switch means 6 are hereby mechanical switches which are switched upon the insertion of the connector jack 11 of the headset 10 into the jack 4 of the mobile terminal 1. Inserting the male part into the female part causes the switch means 6 to switch the microphone lines from the processing means 5 to the internal microphone 3 over to the headset mircrophone 13 and to switch the loudspeaker lines from the processing means 5 over to the internal loudspeaker 2 to the headset loudspeaker 12. Thus, by inserting the connector jack 11 of the headset 10 into the jack 4, the internal loudspeaker 2 and the internal microphone 3 of the mobile terminal 1 are automatically and mechanically switched off and the headset microphone 13 and the headset loudspeaker 12 are activated.

The processing means 5 of the mobile terminal 1 further comprises a detection means 7 for detecting if an external headset 10 is connected and controls the operation of the connected headset 10 on the basis of the detection result. E. g., when the detection means 7 detects that a headset 10 is connected to the mobile terminal 1, the settings of the headset loudspeaker 12 and the headset microphone 13 can be changed by the processing means 5 as compared to the standard settings or the internal loudspeaker 2 and the internal microphone 3 on the basis of the detection result. E. g., the sensitivity, filter characteristics and the like of the headset loudspeaker 12 and the headset microphone 13 can be changed by the processing means 5 on the basis of the detection result from the detection means 7 in this way.

The headset 10 consists essentially of a wire containing the microphone and the loudspeaker lines, the connector jack 11, an earpiece comprising the headset loudspeaker 12 and the box 15 comprising the microphone 13 and a microphone switch means 14. The box 15 is located at a distance from the earpiece comprising the loudspeaker 12, so that, when the earpiece is inserted into the ear of a user, the box with the microphone 13 is close to the mouth of a user. The microphone switch means 14 is a press button which allows a user to switch the microphone 13 into a non-operative state so that, while the user is in a conversation and wants to talk to a third party, is able to switch the microphone 13 off so that a communication partner cannot hear the conversation with the third party. The detection means 7 of the processing means 5 in the mobile terminal 1 is further adapted to detect a corresponding operation state of the headset 10 e. g. if the microphone is in an operative or non-operative state, so that the processing means 5 can control the operation of the headset 10 and /or the operation of the mobile terminal 1 on the basis of the detection result. In this way, the microphone switch means 14 of the headset 10 can further be used to pick up calls or terminate calls or perform further functions related to the operation of the headset 10 and/or the mobile terminal 1.

Fig. 2 shows a more detailed circuit example of essential parts of the mobile terminal 1 and the headset 10 according to the present invention. A capacitor microphone 23 used as the internal microphone of the mobile telephone is, if no external headset 10 is connected to the mobile terminal 1, connected to a positive microphone line 20 and a negative microphone line 21. The positive microphone line 20 and the negative microphone line 21 are connected to the processing means 5 of the mobile terminal 1 as shown in Fig. 1 and supply acoustic signals picked up from the capacitor microphone 23 after conversion into electric signals to the processing means 5 for further processing.

Between the capacitor microphone 23 and the positive microphone line 20, a mechanical switch 26 is arranged. The mechanical switch 26 is part of the switch means 6 of the mobile terminal 1 shown in Fig. 1 and mechanically and automatically switches the positive microphone line 20 between the capacitor (internal) microphone 23 and a capacitor (headset) microphone 42 of an external headset upon connection of the headset to the mobile terminal. As soon as the connected jack 11 of the headset seen (cf. Fig. 1) is connected to the jack 4 of the mobile terminal 1, the mechanical switch 26 is switched from the port 22 of the capacitor microphone 23 to the port 40 of the capacitor microphone 42 of the headset 10.

Further, the port 41 of the capacitor microphone 42 of the headset 10 is connected to a port 24 of the negative microphone line 21 of the mobile terminal 1, so that, when the headset 10 is connected to the mobile terminal 1, the positive microphone line 20 and the negative microphone line 21 are connected to the capacitor microphone 42 of the headset 10 and acoustic signals picked up from the capacitor microphone 42 are supplied to the processing means 5 of the mobile terminal 1.

The internal microphone 3 as well as the headset microphone 13 are capacitor microphones 23 and 42, respectively, so that a direct voltage Vbias is necessary for the respective operation. Thus, a bias voltage Vbias is applied symmetrically to the positive microphone line 20 and the negative microphone line 21 over a respective first resistor 29 and a second resistor 30, the first and the second resistor 29 and 30, respectively having the same resistance value. Hereby, a bias voltage Vbias connection and a ground connection Gnd together with the first and second capacitor 25 and 27, respectively connected in parallel and a resistor 28 connected between the capacitor 25 and 27 on the bias voltage side filter out AC components and provide a stable direct voltage for the capacitor microphones 23 and 42, respectively.

Between the capacitor microphone 23 and the positive microphone line port 22 to be connected to the positive microphone line 20 via the switch 26, i.e. at a connection port 44 of the capacitor microphone 23, a connection to an analog/digital input terminal 33 of the processing means 5 via a low pass filter is provided. The analog/digital input terminal 33 provides a connection to an analog/digital converter being part of the detection means 7 of the mobile terminal 1. The low pass filter comprises a resistor 31 and a capacitor 32 connected to ground, thus has a simple structure and ensures that a clear DC signal is obtained at the analog/digital converter of the detection means 7. The resistor 31 connected in series to the analog/digital input terminal 33 has a high impedance, e. g. 100 Kohm to ensure that there is no interference with the acoustic signals in the microphone lines 20 and 21, respectively.

Via the low pass filter and the analog/digital converter of the detection means 7, a direct voltage level and thus potential or voltage changes in the connection between the capacitor microphone 23 and the positive microphone line port 22 are detected. These potential or voltage changes signify if a headset 10 is connected to the mobile terminal 1 and further, which operation state the headset 10 is in. Without the headset 10 being connected to the mobile terminal 1, the switch 26 is in normal position and connecting the positive microphone line 20 to the capacitor microphone 23. Advantageously, the impedance values of the resistors 29 and 30 and the capacitor microphone 23 are set so that in this normal position, in which the internal microphone and the internal loudspeaker of the mobile terminal 1 are operated, that a quarter (1/4) of the bias value Vbias drops over the first and second resistor 29 and 30, respectively, whereby about half (1/2) of the bias voltage drops across the capacitor microphone 23. Fo4r example, the resistors 29 and 30 respectively have half of the impedance value of the capacitor microphones 23 and 42, respectively. Thus, the analog/digital converter of the detection means 7 connected to the analog/digital input port 33 detects a value of approximately three quarters (3/4) of the bias voltage. If the headset 10 is connected, the switch 26 automatically switches from the positive microphone line port 22 of the mobile terminal 1 to the port 40 of the headset 10 and the analog/digital converter of the detection means 7 detects a voltage or a potential of about one quarter (1/4) of the bias voltage Vbias. Thus, the detection means 7 detects if an external headset 10 is connected on the basis of a variation of the potential detected in the connection port of the capacitor microphone 23.

Parallel to the capacitor microphone 42 of the headset 10, a microphone switch means 14 in form of a press button 43 as shown in Fig. 2 is provided. Pressing the button short circuits the capacitor microphone 42 of the headset 10 and thus switches the capacitor microphone 42 from an operating state into a non-operating state. This feature is for example advantageous if the user using the headset 10 in a conversation over the wireless communication link would like to hold a connection but talk to a third party without his communication partner listening he can press the button and short circuit the capacitor microphone 42. Thus a well defined state is induced in the connection port 44, i.e. a potential or voltage change, and the analog/digital converter in the detecting means 7 detects a voltage of about half (1/2) a bias voltage Vbias. This detected change of the operation state of the headset 10 can be used by the processing means 5 to further change settings of the mobile terminal 1 and/or the headset 10 or execute further actions. Further, the microphone switch means 43 could be used in this way to pick up and/or terminate telephone calls or to change and/or control the operation state or features of the headset 10 or the mobile terminal 1. As above described, the detection means 7 detects the operation state of a connected headset 10 on the basis of a variation of the potential detected in the connection port of the capacitor microphone 23. In the described example, three operation states of the external headset 10 are described, namely a headset not connected state, a headset connected state with headset microphone in operation state, and a headset connected state with headset microphone in non-operation state. All three operation states correspond to a respective value of the voltage detected in the connection port of the capacitor microphone 23. These three voltage values are detected in the detecting means 7 with a respective detection range or threshold. The detection means 7 respectively compares the detected voltage with a predetermined detection range around the respective expected voltage value i.e. 1/4, 1/2 or 3/4 of the bias voltage Vbias. If the detected voltage is outside of each of the predetermined detection ranges, this corresponds to a not defined state, in which e.g. the connection jack 11 of the headset 10 is not properly or correctly connected to the jack 4 of the mobile terminal 1. In this case, the connection means 7 outputs a corresponding signal to the processing means 5 which causes a corresponding measure, as e.g. the output of an acoustic or visual signal to a user indicating that the headset 10 is not correctly connected to the mobile terminal 1.

The present invention therefore provides a simple and effective way to control the operation and the operation state of a mobile terminal 1 and a connected headset 10 with a simple structure.

## Claims

1. Mobile terminal (1) for a wireless communication system, with
an internal loudspeaker (2) for outputting acoustic signals,
an internal microphone (3; 23) for receiving acoustic signals,
a connection means (4) for connecting an external headset (10) comprising a headset loudspeaker (12) and headset microphone (13; 42),
a processing means (5) for operating the internal loudspeaker (2) and the internal microphone (3; 23) or an external headset (10) if connected to said connection means (4),
a switch means (6; 26) for selectively connecting the processing means (5) to said internal loudspeaker (2) and said internal microphone (3, 23) or to an external headset (10) if connected to said connection means (4),
whereby the processing means (5) comprises a detecting means (7) which is connected to a connection port (44) between said switch means (26) and said internal microphone (3, 23),
whereby said internal microphone (23) is connectable to a positive (20) and a negative (21) microphone line to supply said acoustic signal to the processing means,
whereby a first resistor (29) is connected between a bias voltage and the positive microphone line (20), and a second resistor (39) having the same resistance value as the first resistor is connected between the negative microphone line (21) and ground potential,
whereby said first and second resistor each have half the impedance value of the internal microphone (23), and
whereby said detecting means (7) comprises a detection circuit (31, 32, 33) being adapted to detect if the external headset (10) is connected and to detect the operation state of said external headset on the basis of a variation of the potential detected in the connection port (44), whereby said processing means (5) is adapted to control the operation of the mobile terminal (1) and the connected external headset (10) on the basis of the detection result.

2. Mobile terminal (1) according to claim 1,
**characterized in,**
**that** said detecting means (7) comprises a resistor (31) and a capacity (32) for obtaining a clear direct voltage signal.

3. Mobile terminal (1) according to claim 1 or 2,
**characterized in,**
**that** said processing means (5) is adapted to control characteristics of the headset loudspeaker (12) and the headset microphone (13) of a connected external headset (10) on the basis of the detection result.

4. Mobile terminal (1) according to claim 1, 2 or 3,
**characterized in,**
**that** said processing means (5) is adapted to control the operation of the mobile terminal (1) on the basis of the detected operation state of a connected external headset (10).

5. Mobile terminal (1) according to claim 4,
**characterized in,**
**that** said processing means (5) is adapted to control a call pickup function of the mobile terminal (1) on the basis of a specific detected operation state of a connected external headset (10).

6. Mobile terminal (1) according to claim 4 or 5,
**characterized in,**
**that** said processing means (5) is adapted to control a call end function of the mobile terminal (1) on the basis of a specific detected operation state of a connected external headset (10).

7. Mobile terminal (1) according to one of the claims 1 to 6,
**characterized in,**
**that** said detecting means (7) is adapted to detect if the headset microphone (42) of a connected external headset (10) is in an operating state or in an non-operating state.

8. Mobile terminal (1) according to one of the claims 1 to 7,
**characterized in,**
**that** said connection means (4) is a headset connector comprising at least one connection for a headset microphone (13) and at least one connection for a headset loudspeaker (12) of an external headset (10).

9. Mobile terminal (1) according to claim 8,
**characterized in,**
**that** said headset connector is a four pole jack comprising two connections for a headset microphone and two connections for a headset loudspeaker of an external headset.

## Patentansprüche

1. Mobiles Endgerät (1) für ein drahtloses Kommunikationssystem mit
einem internen Lautsprecher (2) zum Ausgeben von akustischen Signalen,
einem internen Mikrofon (3; 23) zum Empfangen von akustischen Signalen,
einem Verbindungsmittel (4) zum Verbinden eines externen Headsets (10), das einen Headset-Lautsprecher (12) und ein Headset-Mikrofon (13; 42) umfasst,
einem Verarbeitungsmittel (5) zum Betreiben des internen Lautsprechers (2) und des internen Mikrofons (3; 23) oder eines externen Headsets (10), wenn es mit dem Verbindungsmittel (4) verbunden ist,
einem Schaltermittel (6; 26) zum selektiven Verbinden des Verarbeitungsmittels (5) mit dem internen Lautsprecher (2) und dem internen Mikrofon (3, 23) oder mit einem externen Headset (10), wenn es mit dem Verbindungsmittel (4) verbunden ist,
wobei das Verarbeitungsmittel (5) ein Detektionsmittel (7) umfasst, das mit einem Verbindungsport (44) zwischen dem Schaltermittel (26) und dem internen Mikrofon (3, 23) verbunden ist, wobei das interne Mikrofon (23) mit einer positiven (20) und einer negativen (21) Mikrofonleitung verbindbar ist, um dem Verarbeitungsmittel das akustische Signal zuzuführen,
wobei ein erster Widerstand (29) zwischen eine Vorspannung und die positive Mikrofonleitung (20) geschaltet ist und ein zweiter Widerstand (39) mit demselben Widerstandswert wie der erste Widerstand zwischen die negative Mikrofonleitung (21) und Massepotential geschaltet ist,
wobei der erste und zweite Widerstand jeweils die Hälfte des Impedanzwerts des internen Mikrofons (23) aufweisen und
wobei das Detektionsmittel (7) eine Detektionsschaltung (31, 32, 33) umfasst, die dafür ausgelegt ist, zu detektieren, ob das externe Headset (10) verbunden ist, und den Betriebszustand des externen Headsets auf der Basis einer Variation des in dem Verbindungsport (44) detektierten Potentials zu detektieren, wobei das Verarbeitungsmittel (5) dafür ausgelegt ist, den Betrieb des mobilen Endgeräts (1) und des verbundenen externen Headsets (10) auf der Basis des Detektionsergebnisses zu steuern.

2. Mobiles Endgerät (1) nach Anspruch 1,
**dadurch gekennzeichnet, dass**
das Detektionsmittel (7) einen Widerstand (31) und eine Kapazität (32) zum Erhalten eines klaren Gleichspannungssignals umfasst.

3. Mobiles Endgerät (1) nach Anspruch 1 oder 2,
**dadurch gekennzeichnet, dass**
das Verarbeitungsmittel (5) dafür ausgelegt ist, Eigenschaften des Headset-Lautsprechers (12) und des Headset-Mikrofons (13) eines verbundenen externen Headsets (10) auf der Basis des Detektionsergebnisses zu steuern.

4. Mobiles Endgerät (1) nach Anspruch 1, 2 oder 3,
**dadurch gekennzeichnet, dass**
das Verarbeitungsmittel (5) dafür ausgelegt ist, den Betrieb des mobilen Endgeräts (1) auf der Basis des detektierten Betriebszustands eines verbundenen externen Headsets (10) zu steuern.

5. Mobiles Endgerät (1) nach Anspruch 4,
**dadurch gekennzeichnet, dass**
das Verarbeitungsmittel (5) dafür ausgelegt ist, eine Anrufentgegennahmefunktion des mobilen Endgeräts (1) auf der Basis eines spezifischen detektierten Betriebszustands eines verbundenen externen Headsets (10) zu steuern.

6. Mobiles Endgerät (1) nach Anspruch 4 oder 5,
**dadurch gekennzeichnet, dass**
das Verarbeitungsmittel (5) dafür ausgelegt ist, eine Anrufbeendigungsfunktion des mobilen Endgeräts (1) auf der Basis eines spezifischen detektierten Betriebszustands eines verbundenen externen Headsets (10) zu steuern.

7. Mobiles Endgerät (1) nach einem der Ansprüche 1 bis 6,
**dadurch gekennzeichnet, dass**
das Detektionsmittel (7) dafür ausgelegt ist, zu detektieren, ob sich das Headset-Mikrofon (42) eines verbundenen externen Headsets (10) in einem Betriebszustand oder in einem Nichtbetriebszustand befindet.

8. Mobiles Endgerät (1) nach einem der Ansprüche 1 bis 7,
**dadurch gekennzeichnet, dass**
das Verbindungsmittel (4) ein Headset-Verbinder ist, der mindestens eine Verbindung für ein Headset-Mikrofon (13) und mindestens eine Verbindung für einen Headset-Lautsprecher (12) eines externen Headsets (10) umfasst.

9. Mobiles Endgerät (1) nach Anspruch 8,
**dadurch gekennzeichnet, dass**
der Headset-Verbinder eine vierpolige Buchse ist, die zwei Verbindungen für ein Headset-Mikrofon und zwei Verbindungen für einen Headset-Lautsprecher eines externen Headsets umfasst.

## Revendications

1. Terminal mobile (1) pour un système de communication sans fil, comprenant :
un haut-parleur interne (2) servant à produire des signaux acoustiques,
un microphone interne (3 ; 23) servant à recevoir des signaux acoustiques,
un moyen de connexion (4) servant à connecter un casque externe (10) comprenant un haut-parleur de casque (12) et un microphone de casque (13 ; 42),
un moyen de traitement (5) servant à faire fonctionner le haut-parleur interne (2) et le microphone interne (3 ; 23) ou un casque externe (10) s'il est connecté audit moyen de connexion (4),
un moyen de commutation (6 ; 26) servant à connecter de façon sélective le moyen de traitement (5) audit haut-parleur interne (2) et audit microphone interne (3 ; 23) ou à un casque externe (10) s'il est connecté audit moyen de connexion (4),
lequel moyen de traitement (5) comprend un moyen de détection (7) qui est connecté à un point de connexion (44) entre ledit moyen de commutation (26) et ledit microphone interne (3 ; 23),
lequel microphone interne (23) est apte à être connecté à une ligne de microphone positive (20) et une ligne de microphone négative (21) pour fournir ledit signal acoustique au moyen de traitement,
une première résistance (29) étant connectée entre une tension de polarisation et la ligne de microphone positive (20), et une deuxième résistance (39) possédant la même valeur de résistance électrique que la première résistance étant connectée entre la ligne de microphone négative (21) et le potentiel de la masse,
lesquelles première et deuxième résistances possédent chacune la moitié de la valeur d'impédance du microphone interne (23), et
lequel moyen de détection (7) comprend un circuit de détection (31, 32, 33) conçu pour détecter si le casque externe (10) est connecté et pour détecter l'état de fonctionnement dudit casque externe en fonction d'une variation du potentiel détectée dans le point de connexion (44), lequel moyen de traitement (5) est conçu pour commander le fonctionnement du terminal mobile (1) et du casque externe (10) connecté en fonction du résultat de la détection.

2. Terminal mobile (1) selon la revendication 1, **caractérisé en ce que**
ledit moyen de détection (7) comprend une résistance (31) et une capacité (32) servant à obtenir un signal de tension continue clair.

3. Terminal mobile (1) selon la revendication 1 ou 2, **caractérisé en ce que**
ledit moyen de traitement (5) est conçu pour commander des caractéristiques du haut-parleur de casque (12) et du microphone de casque (13) d'un casque externe (10) connecté en fonction du résultat de la détection.

4. Terminal mobile (1) selon la revendication 1, 2 ou 3, **caractérisé en ce que**
ledit moyen de traitement (5) est conçu pour commander le fonctionnement du terminal mobile (1) en fonction de l'état de fonctionnement détecté d'un casque externe (10) connecté.

5. Terminal mobile (1) selon la revendication 4, **caractérisé en ce que**
ledit moyen de traitement (5) est conçu pour commander une fonction de prise d'appel du terminal mobile (1) en fonction d'un état de fonctionnement détecté particulier d'un casque externe (10) connecté.

6. Terminal mobile (1) selon la revendication 4 ou 5, **caractérisé en ce que**
ledit moyen de traitement (5) est conçu pour commander une fonction de fin d'appel du terminal mobile (1) en fonction d'un état de fonctionnement détecté particulier d'un casque externe (10) connecté.

7. Terminal mobile (1) selon l'une des revendications 1 à 6, **caractérisé en ce que**
ledit moyen de détection (7) est conçu pour détecter si le microphone de casque (42) d'un casque externe (10) connecté est dans un état de fonctionnement ou dans un état de non-fonctionnement.

8. Terminal mobile (1) selon l'une des revendications 1 à 7, **caractérisé en ce que**
ledit moyen de connexion (4) est un connecteur de casque comprenant au moins une connexion pour un microphone de casque (13) et au moins une connexion pour un haut-parleur de casque (12) d'un casque externe (10).

9. Terminal mobile (1) selon la revendication 8, **caractérisé en ce que**
ledit connecteur de casque est une prise jack tétrapolaire comprenant deux connexions pour un microphone de casque et deux connexions pour un haut-parleur de casque d'un casque externe.
